# EUROPEAN PATENT SPECIFICATION

(11) **EP 1 132 875 B1**
(45) Date of publication and mention of the grant of the patent: **04.04.2018**
(21) Application number: 01400284.4
(22) Date of filing: 06.02.2001
(51) Int. Cl.: G06Q 20/06, G06Q 20/10, G06Q 20/36, G07F 7/08

(54) **Electronic wallet system**
Elektronisches Geldbörsesystem
Système de bourse électronique

(30) Priority: 07.03.2000 EP 00400606
(43) Date of publication of application: 12.09.2001
(73) Proprietor: Thomson Licensing, 92130 Issy-les-Moulineaux (FR)
(72) Inventor: Tang-Talpin, Yan-Mei, 92100 Boulogne-Billancourt (FR); Laurent, Christophe, 92100 Boulogne-Billancourt (FR); Lelievre, Sylvain, 92100 Boulogne-Billancourt (FR)
(74) Representative: Kohrs, Martin

(56) References cited:
- EP-A- 0 546 584
- EP-A- 0 924 667
- WO-A-00/11624
- WO-A-97/04609

## Description

### FIELD OF THE INVENTION

The present invention relates generally to electronics wallets for performing electronic commercial transactions on open networks such as internet, and more particularly to a new electronic wallet architecture and to methods for transferring tokens (or electronic money units) between electronics wallets.

### BACKGROUND ART

Nowadays, a large part of customers often use credit card to make purchase. With this kind of payment system, the cardholder can prove his identity thanks to the knowledge of a secret PIN (Personal Identification Number) stored in the card and, if it is not sufficient, thanks to identification papers located in his wallet.

With the advent of electronic commerce (or e-commerce), all schemes executed every days by customers and merchants can be repeated in the electronic world with few modifications and with the setup of new materials and applications.

Identification papers that proves the identity of an end-entity (customer or merchant) are now replaced by digital certificates and classical wallets which are used in the real world are replaced by electronic wallets (also called E-wallets).

The digital certificates are today largely used by the e-commerce community and are out of the scope of this patent application.

The notion of E-wallet, as disclosed for example in "Merkow M.S., Breithaupt J. and Wheeler K.L., "Building SET Applications for Secure Transacfions", Wiley Computer Publishing, 1998" covers a computer application allowing a consumer to store private information (e.g. credit cards numbers, name, address, etc.) on his PC and to retrieve that information quickly and securely for the purpose of online shopping for example.

Various E-wallet systems have been proposed recently. Some of them are dedicated to the storage of digital certificates in order to provide an easy way to make purchase via "macropayment" schemes such as SET (a standardized e-commerce protocol, information about which can be found in "Loeb L., "Secure Electronic Transactions : Introduction and Technical Reference", Artech House Publishers, 1998"). Among these products are the *IBM Consumer Wallet™* (information about it can be found in the internet publication "http://www-4.ibm.com/.software/commerce/payment/wallet.html") or the *GlobeSet Wallet™* (information about it can be found in the internet publication "http://www.globeset.com/Products/Wallet/wallet.shtml"). <page 2a>

Other systems manage digital coins, or tokens, to make "micropayment" transactions, for example to purchase low value items; while others manage several kinds of data (digital certificates as well as digital coins).

However, if we compare the features offered by the current E-wallets to those satisfied by the wallets used in the real world, we can see that a typical wallet proposes more functionality since we can also exchange money from one wallet to another, store tickets, invoices, pictures, etc.

In addition, all current e-commerce protocols need the user's bank account to make purchase and thus, children are left outside of e-commerce activities.

The present invention is therefore directed to the problem of developing a new electronic wallet which provides more functionality than existing electronic wallets and which is more "family-oriented". Particularly, it should allow children to participate to e-commerce by having their own purse for micropayment transactions and it should allow the same operations as "real-life" wallets (storage of tokens, token transfer facilities between purses, etc.).

### SUMMARY OF THE INVENTION

The present invention solves this problem by providing an electronic wallet system as defined in independent claim 1. The patent application WO 97104609 discloses a system for payment transactions between two cards, each card having a resident account and being inserted in one Mobile Station unit (e.g. telephone) connected to a telecommunication network. A computer system to which mobile stations can be connected handles accounts corresponding to the resident accounts of the cards. The document does not address the issue of a "family-oriented" electronic wallet.

The patent application EP0546584 discloses a data transfer method which is so arranged that, through employment of a portable terminal unit, part or all of the data stored in a first memory of a first IC card is transferred to a second memory of the first IC card.

Thanks to the invention, it is possible to transfer tokens to another purse (registered on the server) without having in hands the corresponding smart card. One advantage of this new electronic wallet system is that it is family-oriented. Each member of the family, including children, can have his/her own purse and use it to make electronic purchases.

With the new feature of the invention, children can now participate to electronic financial operations by making purchase of low value items through micropayment transactions by using their personal purse.

The new electronic wallet system replaces, among others, the pocket money currently used in the real world. Therefore, when one of the parents wants to give money to a child, he/she first has to charge his/her purse with tokens via a classical macropayment transaction (for instance SET) which needs a bank account number. Then, he/she only has to perform an inter-purse operation to transfer a certain amount of tokens from his/her own purse towards the purse of his/her child.

Thanks to the fact that the inter-purse transfer of tokens is managed by the server, the parents do not need to have the smart card representing the purses of their children to charge them with tokens.

### BRIEF DESCRIPTION OF THE DRAWINGS

The various features of the present invention and its preferred embodiment will now be better understood by referring to the following description and the accompanying drawings in which like reference numerals refer to like elements in the several figures. The content of the following description and the drawings are set forth as example only and should not be understood to represent limitations upon the scope of the present invention. In the drawings:
Fig. 1 illustrates the general architecture of an electronic wallet system according to the invention.
Fig. 2 illustrates an example of hardware architecture of an electronic wallet system according to the invention.
Fig. 3 illustrates some data contained in one entity called the server of the electronic wallet system.
Fig. 4 illustrates a first process involved in the transfer of tokens from one purse of the electronic wallet system to another.
Fig. 5 illustrates a second process involved in the transfer of tokens from one purse of the electronic wallet system to another.
Fig. 6 illustrates a second entity called the client and a third entity, a smart card, of the electronic wallet system.
Fig. 7 illustrates a process for authenticating a purse user.
Fig. 8 illustrates the first process for transferring tokens from one purse to another in which security features have been added.
Fig. 9 illustrates the second process for transferring tokens from one purse to another in which security features have been added.
Fig. 10 illustrates some security features in the communication between a second and a third entities.

### DESCRIPTION OF THE PREFERRED EMBODIMENTS

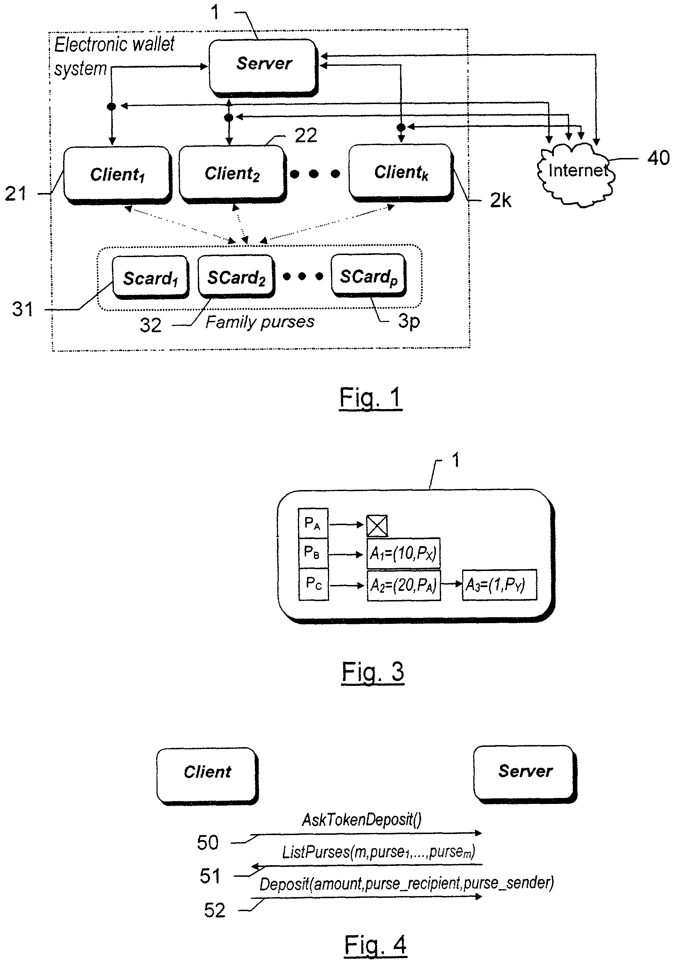

Figure 1 illustrates the general architecture of an electronic wallet system according to the invention which corresponds to the configuration of the system in a family.

As it can be seen on this figure, this typical electronic wallet system contains three entities:
- a first entity 1 called the server which is connected to an open network 40 (for example internet). This entity is responsible of the inter-purses operations, as will be explained in more details bellow, and the storage of digital certificates, invoices, etc. for the members of the family ;
- a set of k second entities 21 to 2k called clients which are also connected to an open network (e.g. Internet). Moreover, each of these clients is also connected to the server via a local home network;
- a set of p smart cards 31 to 3p, the third entities (where p is the number of persons in the family) which implement the purses. Thus, each member of the family possesses his own purse represented by a smart card.

From these different entities, each member of the family should be able to participate to secured e-commerce activities. In fact, a smart card provides to the user an efficient and secure way to store all personal and sensitive data such as private keys, digital tokens, authentication data, etc.

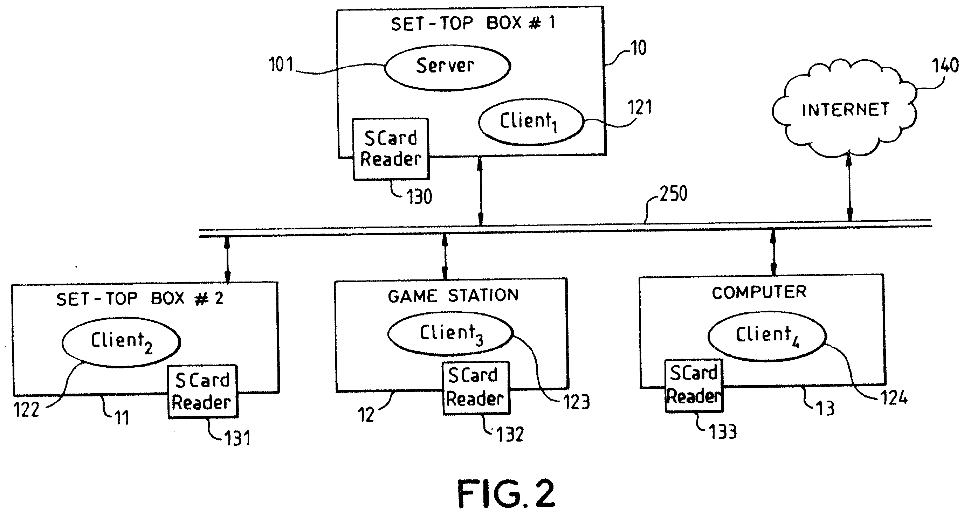

An example of hardware implementation of this architecture is illustrated in Fig. 2. The entities "Server" and "Clients" are implemented, in a preferred embodiment, by software applications running in devices such as set-top boxes, computers, game stations, portable phones or any other home equipment.

In the example of Fig. 2, a first set-top box 10 contains the server application 101 and one Client₁ application 121. This first set-top box is for example located in the living-room of the family house. A second set-top box 11, located in another room of the house, contains another Client₂ application 122, while two other devices, a game station 12 and a computer 13, located in children bedrooms for example, contain respectively Client₃ application 123 and Client₄ application 124. The devices are equipped with smart card readers 130 - 133 and are all connected to a home network 250, which may be an IEEE 1394 wire or wireless network. This home network 250 provides a connection to an open network 140 for all the devices 10-13.

All the applications 101, 121 - 124 use some resources of the devices to access to the smart card readers 130-133 and to the local and / or open network.

In order to simplify the further discussion, the terms "server" and "client" will be used hereafter to refer either to the application itself or to the device containing the application, with the exception that the device referred to as "server" also contains a client application.

Thus, when the user wants to perform electronic financial operations (electronic commerce, token purchase, purse-to-purse token transfer...), he has to insert his smart card in the smart card reader of a client (here, the device) that contains all needed software in order to perform all of these activities (macropayment protocols, micropayment protocols, etc.).

It should be noted that the server is also capable of performing electronic financial and business operations because it also contains a client and that, in an extreme solution, the electronic wallet system contains only one device containing the server application and one client application.

Contrary to classical financial operations (e-commerce, token purchase, etc.), the inter-purses operations need the participation of the server. All needed information used to make these inter-purses operations are centralized in the server which is connected to all clients via a local home network (250 in Fig. 2).

Indeed, when a user A wants to deposit x tokens on a purse P_{B} of a user B, the electronic wallet system, and more precisely the server, will keep a trace of the transaction in order to charge the purse P_{B} with x token at its next use. Advantageously, this functionality is possible even if the client in which the purse P_{B} is inserted is not the same as the one used by the user A to make the token transfer.

To this end, the server contains a list of all registered purses representing the purses which can receive tokens from other purses. It also contains. for each registered purse, a list of "actions" to execute at the next use of the purse. An "action" represents the fact that a number of tokens x has been transferred from a purse P_{Y} to the registered purse.

Fig. 3 shows an example of the server's content. On Fig. 3, three purses P_{A}, P_{B} and P_{C} are registered in the server. The process for registering a purse in the server will be explained bellow.

As for purse P_{A}, no action has been stored meaning that no token has been transferred to purse P_{A} from another purse. As for purse P_{B}, an action A₁, denoted by (10,P_{X}) (meaning that purse P_{B} has received 10 tokens from purse P_{X}), is stored and will be executed at the next use of purse P_{B} as explained bellow.

As for purse P_{C}, actions A_{Z} (20 tokens received from purse P_{A} to purse P_{C}) and A₃ (1 token received from purse P_{Y} to purse P_{C}) will be executed at the next use of P_{C}.

We will now describe two processes involved in the inter-purse transfer of tokens. The first one is called "token deposit" and designates the process executed when a user A wants to transfer tokens from his own purse towards a registered purse of a user B. The second one is called "token receipt" and designates the reverse process which is executed when the user B inserts his smart card in a client.

It is important to note that a user who whishes to receive tokens from other people must make his purse registered on the server whereas a user who only wants to transfer tokens from his purse to other purses does not need to register his purse on the server.

We will first describe the process of "token deposit" in view of Fig. 4.

When a user A who owns a purse P_{A} desires to transfer tokens to another purse, the user A has first to insert his smart card corresponding to purse P_{A} in a client and to chose, via the user interface of the client, the application for transferring tokens to another purse. Then, the client on which the user A is connected sends a request to the server (message *"AskTokenDeposit()"* sent at step 50 - Fig. 4) and the server sends back in response the list of all registered purses (designating those which can receive tokens) in a message *"ListPurses(m,purse₁,* ..., *purseₘ)"* (step 51). *"m"* designates the number of registered purses and *"purse₁,* ..., *purseₘ"* designate the different purse identifiers of the list.

Once the client receives this list, it displays it to the user A who can choose the recipient P_{X} of the token transfer and the amount of tokens to be transferred. Next, the client sends to the server a message *"Deposit(amount, purse*_*recipient*, *purse_sender)"* (at step 52) wherein *"mount"* corresponds to the number of tokens to transfer, *"purse_recipient"* is the recipient's purse identifier (here, it corresponds to P_{X}) and *"purse_sender"* is an information about the sender of the tokens. Advantageously this information will be the sender's purse identifier P_{A} or the name of user A. When the server receives this message, it adds an action Aᵢ=(amount,P_{A}) in the list of actions memorized for purse P_{X}.

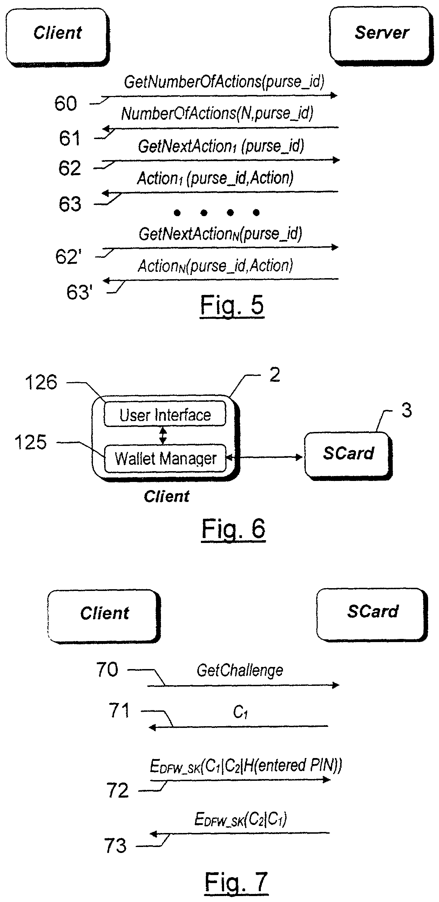

We will now describe the "token receipt" process in view of Fig. 5.

This process is executed each time a user X inserts his smart card in a client. It is used to contact the server in order to execute all actions stored in the server to credit the purse P_{X} owned by the user X. Of course, this process may be executed from any client, no matter in which client the first process of "token deposit" has been executed.

In a first step 60, a message *"GetNumberOfActions(purse_id)",* where *"purse_id"* is the identifier of the purse P_{X}, is sent by the client to the server. In response to this request, the server retrieves the entries in the list of actions corresponding to the purse_id and return the size of the list of actions attached to this purse (P_{X} in the present example) in a message *"NumberOfActions(N,purse_id)"* sent to the client at step 61. "*N*" represents the number of actions memorized for purse P_{X} to be executed and *"purse_id"* is copied from the message *"GetNumberOfActions(purse_id)".* Then, the client verifies that the purse_id is the same that was sent in the *"GetNumberOfActions(purse_id)"* message and stores the number *N* of actions to execute.

Then, for each action i from 1 to N stored in the server for purse P_{X}, the two following messages will be exchanged at steps 62, 63 to 62', 63'. The first message *"GetNextActionᵢ(purse_id)"* is sent by the client to the server with *"purse_id"* being the identifier of the purse P_{X}. On receipt of this message, the server copies the first action of the list attached to the purse P_{X} (c.f. Fig. 3) and clears this action. Then, it sends the second message *"Actionᵢ(purse_id,Action)",* where *"purse_id"* is the identifier of purse P_{X} and *"Action"* is the action to execute (for example: 10 tokens received from purse P_{A} to purse P_{X}), to the client. When the client receives this second message, it executes the action to charge purse P_{X} with the number of tokens indicated in *"Action".*

### Security issues

Before participating in e-commerce activities as well as inter-purses operations with the electronic wallet system of the invention, the user must be sure that the system cannot be easily attacked and for this purpose, solutions providing a sufficient level of security have to be proposed.

First of all, the system must be able to authenticate a user when he/she enters his/her smart card in a client. This feature avoids the use of a smart card by another user than the owner of the card. Moreover, the smart card must also be authenticated in order to ensure that the used card has really been provided by the electronic wallet system manufacturer.

Then, as mentioned previously, a purse must be registered on the server before it can receive tokens from another purse. However, it is necessary to ensure that this registration phase cannot be executed by anybody since in this case, an intruder can register his own purse and route all token transfer messages (messages "*Desposit(amount*,*purse*_*recipient*,*purse*_*sender)*" and *"Actionᵢ(purse_id,Action)*") towards his purse. In fact, only the members of one family should be able to have their purses registered on the server.

In addition, some messages exchanged between a client and the server (during "token deposit" and "token receipt" process - Fig. 4 and 5) have to be protected to ensure that the amount of transfer as well as the recipient purse cannot be modified by a fraudulent user during transmission.

Moreover, messages between the client and the smart card representing the purse, and dedicated to credit or debit tokens should be protected to avoid replay attacks by fraudulent users. A replay attack consists in sending several time a message, for example a message containing an action to credit the purse.

We will now describe the security features which are provided to the electronic wallet system of the invention.

First of all, we suppose that each system contains a shared secret key denoted by DFW_SK, which is provided by the system manufacturer and which is stored in a secure fashion on each entity of the electronic wallet system (clients, server and smart cards).

### 1. User and smart card authentication

This functionality aims at :
(i) authenticating a purse/smart card holder to be the legitimate owner of the purse so that if the purse/smart card is lost or stolen, it cannot be used by others to make purchase;
(ii) authenticating that the used smart card has been provided by the electronic wallet system manufacturer so that if an intruder makes his own card, it will be immediately detected.

The proposed solution needs the communication between the smart card and the client in which the card is inserted, and does not involve the server as will be explained below in view of Fig. 6 and 7.

Fig. 6 represents a client 2 (such as entities 21, 22 to 2k in Fig. 1) in which a smart card 3 is inserted. In fact, as explained previously in view of Fig. 2, the smart is inserted in the smart card reader of a device containing the client application.

The communication between the smart card and the client is performed via a software 125 called Wallet Manager that runs on each client and that allows interfacing the user (through the user interface software 126) and the smart card.

Each member of the family possesses a unique PIN (Personal Identification Number) which is kept secret from others and which is linked to his/her purse. The hashing H(PIN) (where H is a one-way function) of this PIN is stored in the purse of the user.

Therefore, when the user inserts his/her card in a client to perform financial operations, he/she first has to enter his/her PIN. This entered PIN is then sent to the Wallet Manager that computes H(entered PIN).

Now, the retained solution to provide authentication is based on a mutual authentication process which uses a challenge-response based on symmetric-key encryption algorithms, more details about which can be found in *""*Handbook of Applied Cryptography", Menezes A., Van Oorschot P.C and Vanstone S.A., CRC Press, 1997".

Fig. 7 illustrates the exchanged messages during this authentication process.

During the first step 70, the client asks for a challenge to the card by sending a message *"GetChallenge".* The smart card responds by sending a first challenge denoted by "*C₁*" at step 71. A challenge is a random number which is different at each new authentication process and which is used to prevent a "replay attack".

From this challenge C₁ received from the smart card, the client forms a message M by concatenating the challenge C₁, a new challenge generated in the client denoted by C₂ and the H(entered PIN) value that is M=C₁|C₂|H(entered PIN). This message M is then encrypted using the shared secret key DFW_SK and the encrypted message *"E_{DFW_SK}(C₁*|*C₂*|*H(entered PIN))"* is sent to the card at step 72.

When the card receives this encrypted message, it can easily retrieve M and all of its components using the decryption process and the shared secret key DFW_SK of the electronic wallet system contained in the smart card (in this case, this will show that the smart card has been provided by the electronic wallet system manufacturer and thus ensures that aim (ii) mentioned above is achieved).

The smart card then verifies that the decrypted challenge C₁ matches the challenge C₁ sent at step 71. If the verification succeeds, the card proceeds to the PIN verification by verifying that H(PIN)=H(entered PIN). In this case, the user is authenticated as being the legitimate owner of the purse and the process can continue.

A new message M' is then created by concatenating the two challenges C₂ and C₁. This message is encrypted using the DFW_SK key and the encrypted message *"E_{DFW_SK}(C₂*|*C₁)"* is sent back to the client at step 73. Upon reception, the client can authenticate the card by retrieving the two challenges sent in previous exchanges.

### 2. Purse registration

As mentioned previously, in order to receive tokens from other purses, a purse must be registered in the server which is responsible for inter-purses operations.

So, before a user A, for example a children, can receive tokens from a user B, for example one of his/her parents, the purse of user A must be registered in the server.

In a preferred embodiment of the invention, this registration phase will ensure that only members of the family can have their purse registered in the server. Of course this is not strictly limited to real members of the family and the purse registration can be extended to people "considered as" members of the family.

It is therefore proposed that a given member of the family has the root rights to register the purses of all members of the family. Unlike the other members of the family, only this privileged user, called the *"root user"* in the following, will be authorized to execute the registration phase. In the electronic wallet system, the root user is considered as a "third trust party" which will ensures that all registered purses are owned by a member of the family.

In order to implement this functionality, a special smart card for which the PIN has the root rights is provided by the electronic wallet system manufacturer together with the other entities of the system. This special card will be referred to as the *"root card"* in the following. The hashing of the root PIN H(root PIN) is stored in the server to provide the server a way to verify that the user who attempts to execute the registration phase is the root user. Moreover, in a preferred embodiment, the software for executing this registration phase is only contained in the server.

Now, we will describe more precisely how this registration phase is executed. We suppose that user A is the root user. When A wants to register in the server a purse P_{X} belonging to a member X of the family, A has first to insert the root card in the server. The server will then execute the user authentication process as explained previously in view of Fig. 7 between a client and a smart card.

If A enters the root PIN on the user interface of the server, the hashing value of this entered PIN will match H(root PIN) which is stored in the server and A will be authorized to enter a new purse in the server for registration. In the contrary, the registration operation will be canceled.

When authorized, A has to insert the smart card belonging to user X in the server. The purse_id P_{X} of this smart card will then be registered in the server and X will be able to receive tokens from other purses of the system. Of course, the root user A may also enter some other auxiliary information about the user X such as his/her name.

It should be noticed that, when the electronic wallet system is delivered to the customer with a number of smart card corresponding to the number of people in the family, the smart cards are in a "virgin" state. That means that they contain a unique purse_id, the secret key DFW_SK and the hashing H(PIN) of the PIN associated with this card but they contain neither token nor information about the user to whom they will belong.

### 3. Protection of messages between a client and the server

During the inter-purse transfer of tokens which involves two processes ("token deposit" and "token receipt") described previously in view of Fig. 4 and 5, messages exchanged between the server and one client have to be protected as follows.

### a) Messages exchanged during the token deposit process

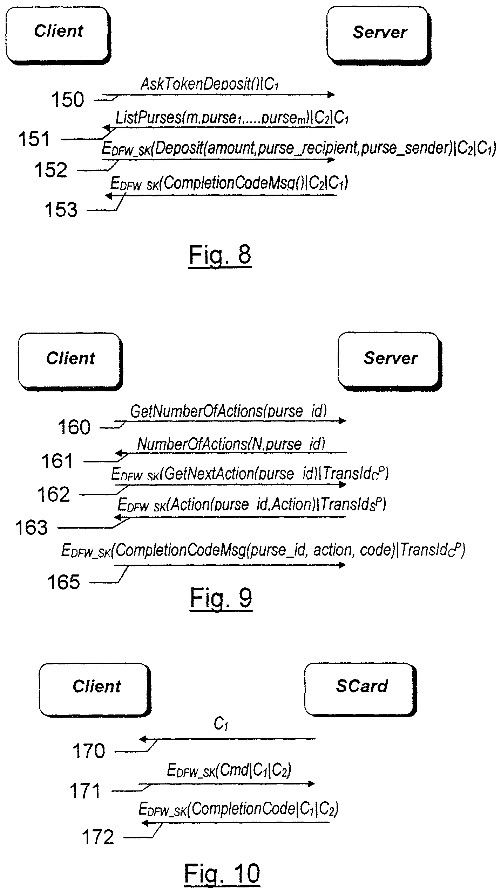

As illustrated in Fig. 4, three messages denoted by *"AskTokenDeposit()", "ListPurses()"* and *"Deposit()"* are exchanged during this process. Fig. 8 illustrates the improved process in which security features have been added.

At first, a first challenge C₁ is generated in the client and concatenated to the message *"AskTokenDeposit()"* when it is sent to the server at step 150. As previously mentioned, the challenge is a random number which is unique for each token assignment process. This feature aims at preventing an intruder to replay messages exchanged during previous token deposit process in order to debit purses which ask for a token deposit process.

When receiving this message, the server temporally stores the challenge C₁ and generates a challenge C₂ and it concatenates these two challenges to the *"ListPurses()"* message which is sent back to the client at step 151. On receipt of this, the client temporally stores the challenge C₂. It will then concatenate the *"Deposit()"* message to the two challenges C₁ and C₂ and encrypt the global message using the DFW_SK key. This encrypted message is sent to the server at step 152. The use of the two challenges C₁ and C₂ aims at preventing the *"Deposit()"* message, which is dedicated to credit a registered purse, to be replayed to credit several times the same purse.

In addition, the *"Deposit()"* message, which includes sensitive data (amount of tokens, recipient purse,...) is encrypted using the DFW_SK key in order to prevent a fraudulent user to modify these data during transmission of the message.

Moreover, the security features should ensure that money cannot be double spent. Therefore, before sending the *"Deposit()"* message at step 152, the client debits the purse, i.e. the smart card inserted in the client, of the amount of tokens to be transferred to another purse. Debited tokens will be newly created and stored on the server side on receipt of the *"Deposit()"* message.

Finally, in case of transmission problems or if the server has been unable to process the token deposit operation, the smart card must be credited again. For this purpose, a new message *"CompletionGodeMsg()"* is created by the server and sent back to the client at step 153. The client can then check the completion code of the operation. If the completion code indicates no error, an operation receipt is stored in the smart card corresponding to the debited purse, and in the other cases, the purse is credited again. This *"CompletionCodeMsg()"* message is concatenated to challenge C1 and challenge C2 and is encrypted using key DFW_SK before being sent at step 153.

### b) Messages exchanged during the token receipt process

As illustrated in Fig. 5, four types of messages denoted by *"GetNumberOfActions()", "NumberOfActions()", "GetNextAction()"* and *"Action()"* are exchanged between the server and one client during this process. Fig. 9 illustrates the improved process in which security features have been added.

Messages *"GetNumberOfActions()"* and *"NumberOfActions()",* which are sent at steps 160 and 161 (similar to steps 60 and 61 in Fig. 5), do not contain any sensitive data. They can thus be sent as plain text.

However, the security features for the other messages should ensure that all actions which are stored on the server are protected so that a user A who owns a purse P_{A} must not be able to route actions stored for a purse P_{B} belonging to a user B towards his own purse P_{A}. Therefore, even if the message *"Action()"* is protected (as we will see below), the user A should not be able to send the message *"GetNextAction()"* for a purse other than his own since in this case, the server clears the requested actions and thus the right recipient purse will never be credited. For this purpose, both messages *"GetNextAction()"* and *"Action()",* sent at steps 162 and 163, are encrypted using the shared secret key DFW_SK in order to protect the purse_id parameter.

The security features of the token receipt process should also ensure that the message *"GetNextAction()"* cannot be replayed. Indeed, even if this message is encrypted, a solution should be proposed which ensures that an intruder cannot replay it because in this case, the next action stored in the server and intended to credit the corresponding purse will be cleared.

For this purpose, according to a preferred embodiment of the invention, each purse P, that is each smart card C, has a *"transaction identifier"* (denoted by TransId_{C}^{P}) of the last token recovery transaction. During the registration process (explained above in section 2.) the server set TransId_{C}^{P} (which is stored in the smart card) to zero, and creates a new transaction identifier denoted by TransId_{S}^{P} and which is also equal to zero. TransId_{S}^{P} is stored in the server's local data, in the entry corresponding to the registered purse P. In this way, for each registered purse, there exist two transaction identifiers which are used in this recovery process to show the validity of exchanged messages.

Now, to ensure that the message *"GetNextAction()"* cannot be replayed, the transaction identifier TransId_{C}^{P} (stored in the smart card representing purse P) is concatenated to this message and the global message is encrypted using the shared secret key DFW_SK before being sent at step 162. Upon reception, the server verifies that TransId_{C}^{P}= TransId_{S}^{P}.

If the verification is positive, the server has to send the *"Action()"* message to the client.

The security features of the token receipt process should moreover ensure that the *"Action()"* message should not be replayed to credit several times the same purse. Therefore, before the server sends the *"Action()"* message to the client, it increments the transaction identifier TransId_{S}^{P} of the corresponding recipient purse P stored in the server, it inserts this incremented TransId_{S}^{P} in the message and sends then the message at step 163 after having encrypted it using key DFW_SK.

Upon reception, the client can check the validity of the message by verifying : TransId_{C}^{P}=TransId_{S}^{P} - 1.

If the verification is positive, the transaction identifier TransId_{C}^{P} stored in the smart card inserted in the client is incremented and the action is executed.

Finally, the security features of the token receipt process should moreover ensure that a user who has credited his purse cannot claim that his purse has never been credited. To this end, a further message denoted by *"CompletionCodeMsg(purse_id,action,code)"* (where *"purse_id*" is the identifier of the purse inserted in the client, "a*ction*" is the action executed and "code" is a completion code indicating the status of the executed action) is sent by the client towards the server at step 165 after execution of the action received. This message is dedicated to give information on the status of the executed operation. In addition, in a preferred embodiment, the transaction identifier TransId_{C}^{P} stored in the smart card is concatenated to the message *"CompletionCodeMsg()"* to ensure the non replay property and the global message is encrypted using the shared secret key DFW_SK to protect its content during transmission at step 165.

### 4. Protection of commands between a client and a smart card

At the deepest level of implementation, commands are exchanged between the Wallet Manager software that runs on each client and the smart card inserted in the client in order to credit or debit tokens on the card representing a purse.

The security applied on these commands should ensure that:
i) all commands sent towards the smart card cannot be replayed to credit or debit a purse. For this purpose, the smart card generates a challenge C₁ to prevent all sent commands to be replayed;
ii) an intruder cannot disconnect the link between the client and the smart card and replay previous smart card's actions in order to avoid to debit the purse. In this case, money can be created in double since the purse has not been decremented and the intruder has responded to the command of the client. For this purpose, the client generates a challenge C₂ to authenticate the purse.

Fig. 10 illustrates the protection of a command "*Cmd"* between a client and a smart card.

We suppose that the client has to send a command Cmd to the card. First of all, it asks for a challenge to the smart card to ensure the freshness of the request. A first challenge C₁ generated in the smart card is sent at step 170 to the client.

Next, the client concatenates the challenge C₁ with a second challenge C₂ generated in the client and with the command Cmd to form a new message denoted by Cmd|C₁|C₂. Then, this new message is encrypted using the secret key DFW_SK and is sent at step 171 to the smart card.

On the smart card side, the integrity and the validity of the message can be checked by decrypting the received message using the shared secret key DFW_SK and by retrieving the challenge C₁. Once the command Cmd is executed, the smart card responds to the client by sending a message containing a completion code *"CompletionCode"* concatenated with the two challenges C₁ and C₂ and encrypted using key DFW_SK.

## Claims

1. Electronic wallet system comprising:
n devices (10 - 13) capable of conducting electronic business transaction on an open network (40, 140) and containing a smart card reader (130 - 133), wherein n is superior or equal to 1, said devices being interconnected through a local network (250) ;
a plurality of smart cards (31 - 3p) representing electronic purses of said system, said purses being able to contain tokens ;
**characterized in that** one of said devices comprises an entity (1, 101), called the server of said system, which contains a list of data entries, each entry corresponding to a purse liable to receive tokens from others purses of said system, and **in that** each of said devices further comprises an entity (21,22,2k ; 121-124), called the client, which performs a depositing-crediting operation and a registration operation by communicating with the server via said local network wherein
during said depositing-crediting operation in which tokens are transferred from a first purse to a second purse, the client containing one of said smart card readers with said first purse inserted selects, from said list of data entries, said second purse to which tokens will be assigned; the client with said first purse inserted assigns tokens from said first purse to said second purse, said server stores tokens of the depositing operation in the data entry corresponding to said second purse, and when said second purse is present in one of said smart card readers of the client, the client with said second purse inserted credits tokens to said second purse
wherein said depositing operation and crediting operation are performed in two different times wherein the first and the second purse are not necessarily simultaneously present in one of said smart card readers.

2. System according to claim 1, **characterized in that** a purse is able to be registered in the server of said system, the registration operation comprising for a device containing the server in :
- receiving a specific smart card, called the root card ;
- receiving a personal identification number (PIN) entered by a user on said device ;
- verifying that said entered personal identification number matches a personal identification number stored in said root card ; and, should verification be positive :
- receiving a smart card corresponding to the purse to be registered, said smart card containing a purse identifier (Purse_id) ; and
- storing said purse identifier in the list of data entries contained in said server.

3. System according to claim 1, **characterized in that** the depositing operation of tokens from a first purse for a second purse in an electronic wallet system comprises for a device containing the client in :
a) receiving a first smart card corresponding to said first purse ;
b) sending (50, 150) a first message to the server to request a token deposit;
c) receiving (51, 151) from said server a list of purses liable to receive tokens ; and
d) sending (52, 152) a second message containing an amount of tokens and a purse identifier corresponding to said second purse to deposit said amount of tokens with said server for said second purse.

4. System according to claim 3, **characterized in that** the amount of tokens is debited from said first purse before the sending of the second message and **in that** the depositing operation further comprises:
e) receiving (153) a third message from said server, said third message containing a completion code of the deposit operation with the server ;
f) checking said completion code and :
- storing an operation receipt in said smart card if said completion code indicates no error; or
- crediting again said first purse with said amount of tokens if said completion code indicates one error.

5. System according to claim 1, **characterized in that** the depositing operation of tokens from a first purse for a second purse in an electronic wallet system comprises for a device containing the server, in :
i) receiving (50, 150) from a client a first message requesting a token deposit;
j) sending (51, 151) to said client a list of purses liable to receive tokens ;
k) receiving (52, 152) from said client a second message containing an amount of tokens and a purse identifier corresponding to said second purse ; and
l) storing said amount of tokens in the data entry corresponding to said second purse.

6. System according to claim 1, **characterized in that** the crediting operation of tokens in a second purse in an electronic wallet system comprises for a device containing a client entity, in :
m) receiving a smart card corresponding to said second purse ;
n) sending (60, 160) a fourth message to the server to request the receipt of tokens deposited with the server for said second purse ;
o) receiving (61, 161) a fifth message containing a number N of actions stored by the server in the data entry corresponding to said second purse, each action containing an amount of tokens received from one purse of said electronic wallet system ; and
p) for each action i between 1 to N :
p1) sending (62, 62', 162) a sixth message to the server to request the next action i ;
p2) receiving (63, 63', 163) a seventh message from the server containing said action i ; and
p3) storing in said smart card corresponding to the second purse the amount of tokens contained in said action i.

## Patentansprüche

1. Elektronisches Brieftaschensystem umfassend:
n Vorrichtungen (10 - 13), die in der Lage sind, elektronische Geschäftsvorgänge in einem offenen Netzwerk (40, 140) durchzuführen, und die einen Chipkartenleser (130 - 133) enthalten, wobei n größer oder gleich 1 ist, wobei die Vorrichtungen über ein lokales Netzwerk (250) miteinander verbunden sind;
eine Vielzahl von Chipkarten (31 - 3p), die elektronische Geldbörsen des Systems darstellen, wobei die Geldbörsen Token enthalten können;
**dadurch gekennzeichnet, dass** eine der Vorrichtungen eine Entität (1, 101) umfasst, die als Server des Systems bezeichnet wird, die eine Liste von Dateneinträgen enthält, wobei jeder Eintrag einer Geldbörse entspricht, die dazu geeignet ist, Token von anderen Geldbörsen des Systems zu erhalten, und dass jede der Vorrichtungen ferner eine Entität (21, 22, 2k; 121-124) umfasst, die als Client bezeichnet wird, die einen Einzahlungs- und Gutschriftenvorgang und einen Registrierungsvorgang durch Kommunikation mit dem Server durchführt, wobei
während des Einzahlungs- und Gutschriftenvorgangs, bei dem Token von einer ersten Geldbörse zu einer zweiten Geldbörse übertragen werden, der Client, der einen der Chipkartenleser enthält, bei dem die erste Geldbörse eingesetzt ist, aus der Liste der Dateneingaben die zweite Geldbörse auswählt, der die Token zugeordnet werden; wobei der Client die in die erste Geldbörse geladenen Token aus der ersten Geldbörse der zweiten Geldbörse zuordnet, der Server die Token des Einzahlungsvorgangs in der Dateneingabe entsprechend der zweiten Geldbörse speichert, wenn die zweite Geldbörse in einem der Chipkartenleser des Client vorhanden ist, wobei der Client mit der zweiten Geldbörse Gutschriften in die zweite Geldbörse einsetzt,
wobei der Einzahlungsvorgang und der Gutschriftenvorgang in zwei verschiedenen Zeiten durchgeführt werden, wobei die erste und die zweite Geldbörse nicht notwendigerweise gleichzeitig in einem der Chipkartenleser vorhanden sind.

2. System nach Anspruch 1, **dadurch gekennzeichnet, dass** eine Geldbörse in dem Server des Systems registriert werden kann, wobei der Registrierungsvorgang für eine Vorrichtung, die den Server enthält, umfasst:
- Empfangen einer bestimmten Chipkarte, die so genannte Root-Karte;
- Empfangen einer persönlichen Identifikationsnummer (PIN), die von einem Benutzer in das Gerät eingegeben wird;
- Verifizieren, dass die eingegebene persönliche Identifikationsnummer mit einer persönlichen Identifikationsnummer übereinstimmt, die in der Root-Karte gespeichert ist; und, sollte das Verifizieren positiv sein:
- Empfangen einer Chipkarte, die der zu registrierenden Geldbörse entspricht, wobei die Chipkarte eine Geldbörsenkennung (Purse_id) enthält; und
- Speichern der Geldbörsenkennung in der Liste der Dateneinträge, die im Server enthalten sind.

3. System nach Anspruch 1, **dadurch gekennzeichnet, dass** das Laden von Token aus einer ersten Geldbörse für eine zweite Geldbörse in einem elektronischen Brieftaschensystem für eine Vorrichtung, die den Client enthält, umfasst:
a) Empfangen einer ersten Chipkarte, die der ersten Geldbörse entspricht;
b) Senden (50, 150) einer ersten Nachricht an den Server, um ein Laden von Token anzufordern;
c) Empfangen (51, 151) einer Liste von Geldbörsen, die zum Empfangen von Token geeignet sind, vom Server; und
d) Senden (52, 152) einer zweiten Nachricht, die eine Menge an Token und eine der zweiten Geldbörse entsprechende Geldbörsenkennung enthält, um die Menge an Token mit dem Server für die zweite Geldbörse zu hinterlegen.

4. System nach Anspruch 3, **dadurch gekennzeichnet, dass** die Menge der Token von der ersten Geldbörse vor dem Senden der zweiten Nachricht abgebucht wird und dass der Einzahlungsvorgang weiterhin umfasst:
e) Empfangen (153) einer dritten Nachricht vom Server, wobei die dritte Nachricht einen Vervollständigungscode des Einzahlungsvorgangs mit dem Server enthält;
f) Prüfen des Vervollständigungscodes und:
- Speichern einer Vorgangsbestätigung in der Chipkarte, wenn der Vervollständigungscode keinen Fehler anzeigt; oder
- Nochmaliges Gutschreiben der ersten Geldbörse mit der Anzahl der Token, wenn der Vervollständigungscode einen Fehler anzeigt.

5. System nach Anspruch 1, **dadurch gekennzeichnet, dass** die Einlage von Token aus einer ersten Geldbörse für eine zweite Geldbörse in einem elektronischen Brieftaschensystem für eine Vorrichtung, die den Server enthält, umfasst:
i) Empfangen (50, 150) einer ersten Nachricht von einem Client, der ein Laden von Token anfordert;
j) Senden (51, 151) einer Liste von Geldbörsen an den Client, die für das Empfangen von Token geeignet sind;
k) Empfangen (52, 152) einer zweiten Nachricht vom Client, die eine Menge von Token und eine Geldbörsenkennung enthält, die der zweiten Geldbörse entspricht; und
l) Speichern der Menge an Token in der Dateneingabe, die der zweiten Geldbörse entspricht.

6. System nach Anspruch 1, **dadurch gekennzeichnet, dass** die die Gutschrift von Token in einer zweiten Geldbörse in einem elektronischen Brieftaschensystem für eine Vorrichtung, die einen Client enthält, umfasst:
m) Empfangen einer Chipkarte, die der zweiten Geldbörse entspricht;
n) Senden (60, 160) einer vierten Nachricht an den Server, um den Empfang von Token, die beim Server für die zweite Geldbörse hinterlegt sind, anzufordern;
o) Empfangen (61, 161) einer fünften Nachricht, die eine Anzahl N von Aktionen enthält, die vom Server in der Dateneingabe gespeichert sind, die der zweiten Geldbörse entspricht, wobei jede Aktion eine Anzahl von Token enthält, die von einer Geldbörse des elektronischen Brieftaschensystems empfangen wurde; und
p) für jede Aktion I zwischen 1 und N:
p1) Senden (62, 62', 162) einer sechsten Nachricht an den Server, um die nächste Aktion i anzufordern;
p2) Empfangen (63, 63', 163) einer siebten Nachricht vom Server, der die Aktion i enthält; und
p3) Speichern der Menge an Token, die in der Aktion i in der Chipkarte enthalten sind, die der zweiten Geldbörse entspricht.

## Revendications

1. Système de bourse électronique, comprenant :
n dispositifs (10 - 13) capables de mener une transaction commerciale électronique sur un réseau ouvert (40, 140) et contenant un lecteur de carte intelligente (130 - 133), dans lequel n est supérieur ou égal à 1, lesdits dispositifs étant interconnectés via un réseau local (250) ;
une pluralité de cartes intelligentes (31 - 3p) représentant des porte-monnaie électroniques dudit système, lesdits porte-monnaie pouvant contenir des jetons ;
**caractérisé en ce que** l'un desdits dispositifs comprend une entité (1, 101), appelée le serveur dudit système, qui contient une liste d'entrées de données, chaque entrée correspondant à un porte-monnaie fiable pour recevoir des jetons d'autres porte-monnaie dudit système, et **en ce que** chacun desdits dispositifs comprend en outre une entité (21, 22, 22k ; 211-124), appelée le client, qui effectue une opération de dépôt-crédit et une opération d'enregistrement en communiquant avec le serveur via ledit réseau local, dans lequel
pendant ladite opération de dépôt-crédit dans laquelle des jetons sont transférés d'un premier porte-monnaie vers un second porte-monnaie, le client contenant l'un desdits lecteurs de carte intelligente avec ledit premier porte-monnaie inséré sélectionne, dans ladite liste d'entrées de données, ledit second porte-monnaie auquel des jetons seront affectés ; le client avec ledit premier porte-monnaie inséré affecte des jetons dudit premier porte-monnaie audit second porte-monnaie, ledit serveur stocke des jetons de l'opération de dépôt de l'entrée de données correspondant audit second porte-monnaie, et lorsque ledit second porte-monnaie est présent dans l'un desdits lecteurs de carte intelligente du client, le client avec ledit second porte-monnaie inséré crédite des jetons sur ledit second porte-monnaie
lorsque ladite opération de dépôt et ladite opération de crédit sont effectuées à deux moments différents, où le premier et le deuxième porte-monnaie ne sont pas nécessairement présents simultanément dans l'un desdits lecteurs de carte intelligente.

2. Système selon la revendication 1, **caractérisé en ce qu'**un porte-monnaie peut être enregistré dans le serveur dudit système, l'opération d'enregistrement comprenant pour un dispositif contenant le serveur les étapes visant à :
- recevoir une carte intelligente spécifique, appelée carte racine ;
- recevoir un numéro d'identification personnel (PIN) entré par un utilisateur sur ledit dispositif ;
- vérifier que ledit numéro d'identification personnel entré correspond à un numéro d'identification personnel stocké dans ladite carte racine ; et, si la vérification est positive :
- recevoir une carte intelligente correspondant au porte-monnaie devant être enregistré, ladite carte intelligente contenant un identifiant de porte-monnaie (Purse_id) ; et
- stocker ledit identifiant de porte-monnaie dans la liste d'entrées de données contenue dans ledit serveur.

3. Système selon la revendication 1, **caractérisé en ce que** l'opération de dépôt de jetons d'un premier porte-monnaie pour un second porte-monnaie dans un système de bourse électronique comprend pour un dispositif contenant le client :
a) la réception d'une première carte intelligente correspondant audit premier porte-monnaie ;
b) l'envoi (50, 150) d'un premier message au serveur pour demander un dépôt de jeton :
c) la réception (51, 151) à partir dudit serveur d'une liste de porte-monnaie fiables pour recevoir des jetons ; et
d) l'envoi (52, 152) d'un second message contenant une quantité de jetons et un identifiant de porte-monnaie correspondant audit second porte-monnaie pour déposer ladite quantité de jetons avec ledit serveur pour ledit second porte-monnaie.

4. Système selon la revendication 3, **caractérisé en ce que** la quantité de jetons est débitée dudit premier porte-monnaie avant l'envoi du second message et **en ce que** l'opération de dépôt comprend en outre
e) la réception (153) d'un troisième message à partir dudit serveur, ledit troisième message contenant un code d'achèvement de l'opération de dépôt avec le serveur ;
f) la vérification dudit code d'achèvement et :
- le stockage d'un reçu d'opération dans ladite carte intelligente si ledit code d'achèvement n'indique aucune erreur ; ou
- la répétition du crédit sur ledit premier porte-monnaie avec ladite quantité de jetons si ledit code d'achèvement indique une erreur.

5. Système selon la revendication 1, **caractérisé en ce que** l'opération de dépôt de jetons d'un premier porte-monnaie pour un second porte-monnaie dans un système de bourse électronique comprend pour un dispositif contenant le serveur :
i) la réception (50, 150) à partir d'un client d'un premier message demandant un dépôt de jeton ;
j) l'envoi (51, 151) audit client d'une liste de porte-monnaie fiables pour recevoir des jetons ;
k) la réception (52, 152) à partir dudit client d'un second message contenant une quantité de jetons et un identifiant de porte-monnaie correspondant audit second porte-monnaie; et
l) le stockage de ladite quantité de jetons dans l'entrée de données correspondant audit second porte-monnaie.

6. Système selon la revendication 1, **caractérisé en ce que** l'opération de crédit de jetons dans un second porte-monnaie dans un système de bourse électronique comprend pour un dispositif contenant une entité de client :
m) la réception d'une carte intelligente correspondant audit second porte-monnaie ;
n) l'envoi (60, 160) d'un quatrième message au serveur pour demander la réception des jetons déposés avec le serveur pour ledit second porte-monnaie ;
o) la réception (61, 161) d'un cinquième message contenant un nombre N d'actions stockées par le serveur dans l'entrée de données correspondant audit second porte-monnaie, chaque action contenant une quantité de jetons reçus d'un porte-monnaie dudit système de bourse électronique ; et
p) pour chaque action i entre 1 et N :
p1) l'envoi (62, 62', 162) d'un sixième message au serveur pour demander l'action i suivante ;
p2) la réception (63, 63', 163) d'un septième message du serveur contenant ladite action i ; et
p3) le stockage dans ladite carte intelligente correspondant au second porte-monnaie de la quantité de jetons contenus dans ladite action i.
